# EUROPÄISCHE PATENTSCHRIFT

(11) **EP 2 242 403 B1**
(45) Veröffentlichungstag und Bekanntmachung des Hinweises auf die Patenterteilung: **09.11.2011**
(21) Anmeldenummer: 08868850.2
(22) Anmeldetag: 21.12.2008
(51) Int. Cl.: A47G 7/08, A01G 9/02

(54) **VERLKLEIDUNG FÜR EINEN BEHÄLTER**
CASING FOR A CONTAINER
REVÊTEMENT POUR UN CONTENANT

(30) Priorität: 27.12.2007 DE 102007063557
(43) Veröffentlichungstag der Anmeldung: 27.10.2010
(73) Patentinhaber: Wigand, Armin, 66879 Steinwenden (DE)
(72) Erfinder: Wigand, Armin, 66879 Steinwenden (DE)
(74) Vertreter: Klein, Friedrich Jürgen
(86) Internationale Anmeldenummer: PCT/EP2008/010987
(87) Internationale Veröffentlichungsnummer: WO 2009/083207

(56) Entgegenhaltungen:
- EP-A- 1 067 057
- FR-A- 2 265 263
- GB-A- 1 243 510
- GB-A- 1 358 863
- US-A- 4 279 455
- US-A- 4 712 942

## Beschreibung

Bei der Verwendung von in Gärten, Parks oder auf Plätzen aufzustellenden oben offenen Behältern, z. B. Brunnen- oder Pflanzkübeln, besteht das Bedürfnis, diese Behälter so zu gestalten, dass sie hinsichtlich ihrer Farbe und / oder ihrer Oberflächenstruktur an die Beschaffenheit der Umgebung anpassbar sind. Zu diesem Zweck können die äußeren Seitenflächen der Behälter in entsprechender Weise ausgestaltet sein. Dies ist jedoch für den Fall sehr umständlich und aufwendig, wenn eine größere Anzahl unterschiedlicher Farb- und Oberflächenstrukturvarianten abgedeckt werden soll. Sehr viel zweckmäßiger ist es dagegen, wenn die Behälter mit einer entsprechend gestalteten Verkleidung versehen werden. Hierbei können die Behälter hinsichtlich ihrer äußeren Erscheinung einheitlich ausgebildet sein. Die farb- und oberflächenstrukturmäßige Anpassung an die Umgebung erfolgt in diesem Fall mit Hilfe der einfacher aufgebauten und gegebenenfalls austauschbaren Verkleidung.

Aus dem Gebiet der Bautechnik ist zum Beispiel durch die DE 10 2004 041 120 A1 eine Fassadenverkleidung bekannt, bei der Verkleidungsplatten, insbesondere Steinplatten, mit Hilfe von Haltegliedern auf Tragkonsolen eingehängt bzw. befestigt werden, die ihrerseits am Baukörper montiert sind. Bei diesen Tragkonsolen handelt es sich um Einzelkonsolen, die an den Stoßpunkten mehrerer aneinanderstoßender Verkleidungsplatten angeordnet sind. Die Einzelkonsolen sind mehrdimensional einstellbar, wodurch die Verkleidungsplatten zu einer ebenen Fassadenfläche ausgerichtet werden können. Da die bekannte Fassadenverkleidung aus einer Vielzahl von in einer Ebene angeordneten Verkleidungsplatten besteht, kann die bei ihr verwirklichte Aufhängetechnik keine Anregung für die Entwicklung einer Verkleidung eines Behälters geben, da für diesen Zweck bevorzugt einteilige Verkleidungsplatten verwendet werden.

Durch die DE 199 31 040 C2 ist ein Verkleidungssystem für eine Badewanne bekannt, bei dem mehrere die Verkleidung bildende plattenförmige Elemente an einer Unterkonstruktion lösbar befestigt sind. Die Unterkonstruktion weist mehrere vertikale Ständerprofile auf, an denen ein unteres Rahmenprofil mit Hilfe klammerartiger Befestigungselemente angeordnet ist. Bei diesem Verkleidungssystem sind somit die Verkleidungsplatten nicht wie bei der Fassadenverkleidung an dem zu verkleidenden Objekt, sondern an der erwähnten Unterkonstruktion angeordnet, was einen zusätzlichen Aufwand bedeutet.

EP 1 067 057 offenbart einen abmoatierbaren Belälter, wobei die Wände durch vertikale Echchips miteinander befatigt sind.

Der Erfindung liegt daher die Aufgabe zugrunde, sowohl einen Bausatz für eine Verkleidung als auch eine danach hergestellte Verkleidung für einen oben offenen Behälter zu schaffen, der einfach aufgebaut ist und ohne Unterkonstruktion um den Behälter herum angeordnet werden kann. Die Aufgabe wird durch die Merkmale des Anspruches 1 und des Anspruches 8 gelöst.

Die Erfindung beruht im Wesentlichen auf dem Gedanken, die Verkleidung aus Plattenelementen und zusammensteckbaren Kupplungsmitteln aufzubauen. Auf diese Weise können die Verkleidungsplatten mit Hilfe der Kupplungsmittel zu einer in sich stabilen, verwindungssteifen Umhüllung zusammengefügt werden, die sich weder an dem zu verkleidenden Behälter abstützen muss, noch eine als Traggerüst dienende Unterkonstruktion benötigt. Ein weiterer Vorteil der erfindungsgemäßen Verkleidung besteht darin, dass ihre einander zugeordneten Bestandteile zu einem flachen und daher leicht zu transportierenden und platzsparend zu lagernden Bausatz zusammengefasst sein können. Schließlich ermöglicht die Verwendung von in vertikaler Richtung zusammenfügbaren Kupplungsmitteln, dass die Verkleidung ohne Zuhilfenahme von Werkzeugen am Aufstellungsort des zu verkleidenden Behälters aufgebaut werden kann.

Bei der im Anspruch 1 angegeben Ausgestaltung der Erfindung bestehen die mit den Verkleidungsplatten fest verbundenen ersten Kupplungsmittel und die ihnen zugeordneten zweiten Kupplungsmittel aus unteren und oberen Ausführungsformen, wobei die oberen Kupplungsmittel eine Haltefunktion in horizontaler Richtung und die unteren Kupplungsmittel außer der Haltefunktion noch eine Tragfunktion in vertikaler Richtung erfüllen. Die feste Verbindung der ersten Kupplungsmittel, also der Verbindungsstücke und der Eckstücke mit den Verkleidungsplatten erfolgt vorzugsweise in der Form, dass die an den Verbindungsstücken und Eckstücken ausgebildeten Rippen in den entsprechenden Aufnahmeschlitzen der Verkleidungsplatten dauerhaft eingeklebt sind.

Dabei ist die Maßnahme, an den Verbindungs- und Eckstücken Rippen auszubilden und diese in entsprechende Aufnahmeschlitze der Verkleidungsplatten einzubringen, in so weit besonders vorteilhaft, als einerseits die Bruchgefahr der Verkleidungsplatten beim Einbringen von Schlitzen wesentlich geringer als beim Einbringen von Bohrungen ist, und andererseits die Schlitze und Rippen eine wesentlich größere Kontaktfläche zum Kleben bieten, als beispielsweise beim Einführen von Zapfen in Bohrungen.

Bei der Ausgestaltung des Ausführungsbeispiels für einen Bausatz gemäß An-spruch 1 wurde davon ausgegangen, dass der zu verkleidende Behälter einen viereckigen oder rechteckigen Grundriss aufweist. Es ist jedoch möglich, auch anders geformte Behälter zu verkleiden, z. B. solche mit einem vieleckigen oder sogar mit einem kreisförmigen Grundriss. In einem solchen Fall müssten lediglich die ersten und zweiten Kupplungsmittel an die jeweilige Winkelstellung angepasst werden, mit der hierbei die Verkleidungsplatten zueinander stehen.

In den Ansprüchen 2 bis 5 sind weitergehende Ausgestaltungen der Erfindung angegeben.

Durch die in Anspruch 6 angegebene Maßnahme, auf den Trägerplatten einen Gewindeansatz für eine in vertikaler Richtung verstellbare Justierschraube anzuordnen, besteht die Möglichkeit, die Verkleidung auf einem schräg verlaufenden oder unebenen Untergrund auszurichten. Sofern es sich hierbei um einen weichen Untergrund handelt, wie zum Beispiel Sand, Kies oder Rasen, wird durch Anspruch 7 vorgeschlagen, dass jeweils eine Bodenplatte untergelegt wird, auf der sich die Justierschrauben abstützen können.

Die unter Verwendung des Bausatzes hergestellte Verkleidung gemäß den weiteren Ansprüchen hat den Vorteil, daß sie sich jederzeit ohne zu Hilfenahme von Werkzeugen wieder auseinander nehmen und auch wieder zusammensetzen lässt. Dieser Vorteil wirkt sich insbesondere dann aus, wenn der Behälter zur Aufnahme von Pflanzen dient, die über Winter in einem Keller oder einer Garage aufbewahrt werden, und die Verkleidung als Bausatz platzsparend aufbewahrt werden kann.

Die Erfindung ist anhand eines in der Zeichnung dargestellten Ausführungsbeispiels erläutert. Es zeigen:
- Fig. 1: eine schaubildliche Darstellung eines Behälters und einer Verkleidung;
- Fig. 2: eine schaubildliche Darstellung einer Verkleidung, mit den ersten, an den Verkleidungsplatten fest angebrachten Kupplungsmitteln und den zweiten Kupplungsmitteln, wobei diese zum einen in der Kupplungsstellung mit den ersten Kupplungsmitteln und zum anderen in einer von den ersten Kupplungsmitteln entfernten Stellung gezeigt sind;
- Fig. 3: eine Darstellung eines Teils einer Verkleidungsplatte und der unteren Ausführungsform der ersten und zweiten Kupplungsmittel in auseinander geschobenen Stellungen;
- Fig. 4: eine Darstellung eines Teils einer Verkleidungsplatte und der oberen Ausführungsform des ersten Kupplungsmittels in auseinander geschobener Stellung und
- Fig. 5: eine schaubildliche Darstellung der oberen Ausführungsform der ersten und zweiten Kupplungsmittel.

Die Verkleidung 1 für einen oben offenen, im Grundriss viereckigen Behälter 2 mit ebenfalls viereckigen Seitenwänden 3 weist vier Verkleidungsplatten 4 auf, deren Form und Größe an die Form und Größe der Seitenwände 3 des Behälters 2 angepasst ist. Die Verkleidungsplatten 4 werden mit Hilfe von ersten, an den Verkleißungsplatten 4 fest angebrachten Kupplungsmitteln I und zweiten mit diesen in eine Kupplungsstellung bringbaren Kupplungsmitteln II zu der Verkleidung 1 zusammengefügt. Die Verkleidung 1 deckt die Seitenwände 3 des Behälters 2 ab und umhüllt ihn dadurch umfangsseitig.

Beim gezeigten Ausführungsbeispiel unterteilen sich die ersten Kupplungsmittel I jeweils in eine untere Ausführungsform 20 und eine obere Ausführungsform 30. In gleicher Weise unterteilen sich auch die zweiten Kupplungsmittel II jeweils in eine untere Ausführungsform 40 und eine obere Ausführungsform 50.

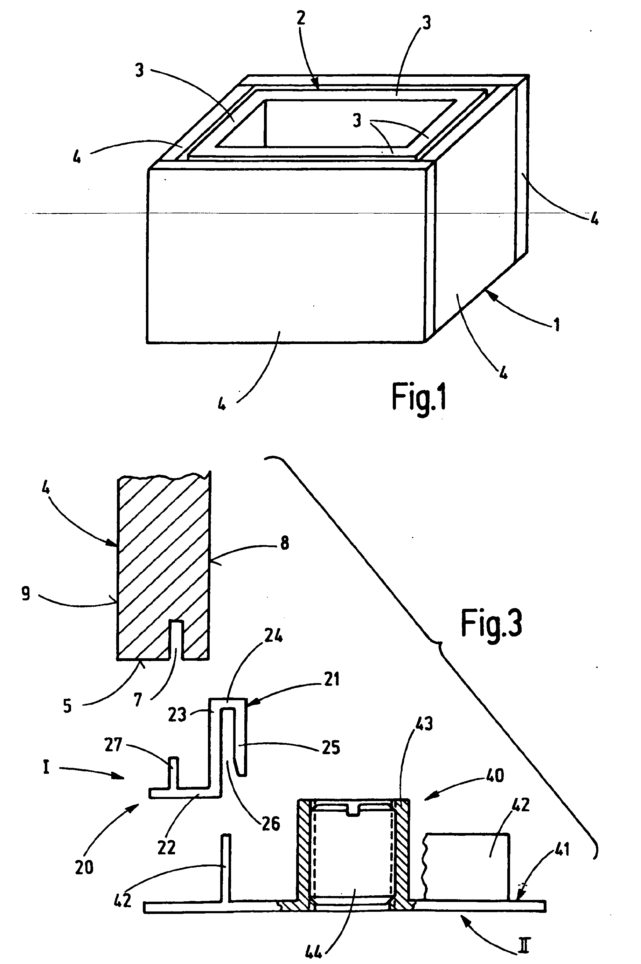

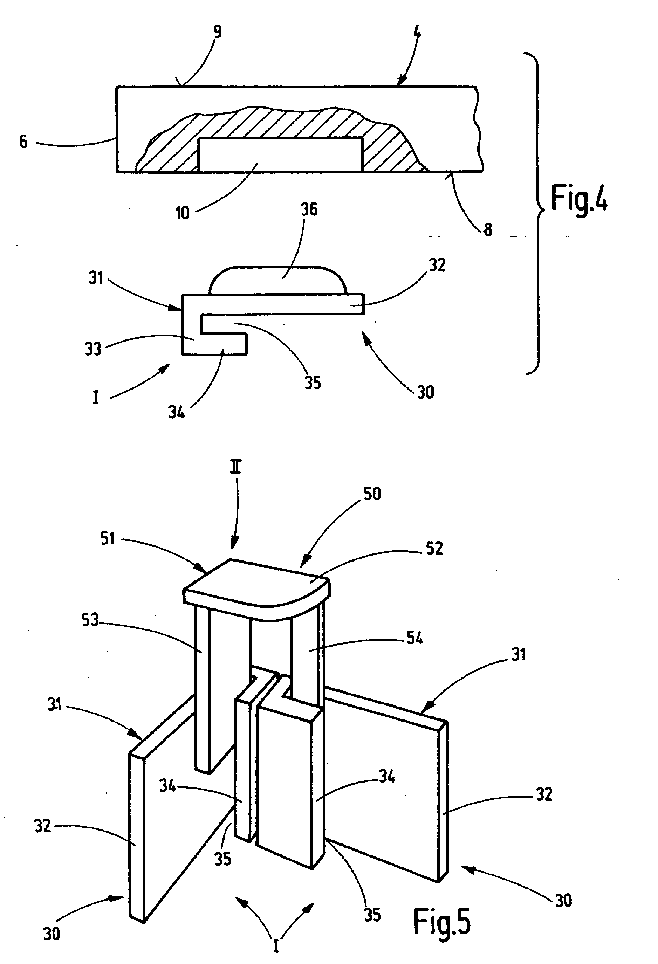

Die Verkleidungsplatten 4 weisen an ihren unteren Stirnseiten 5 in der Nähe ihrer vertikal verlaufenden Stirnseiten 6 Aufnahmeschlitze 7 auf (Fig. 3), die innerhalb der Verkleidungsplatten 4 parallel zu deren Innenflächen 8 bzw. Außenflächen 9 verlaufen. Die Verkleidungsplatten 4 weisen ferner an ihrer Innenfläche 8 in der Nähe ihrer vertikal verlaufenden Stirnseiten 6 horizontal verlaufende Aufnahmeschlitze 10 auf (Fig. 4).

Die untere Ausführungsform 20 der ersten Kupplungsmittel I weist ein Verbindungsstück 21 auf. Das Verbindungsstück 21 besteht aus einer schmalen Grundplatte 22, die in der Gebrauchslage des Verbindungsstückes 21 horizontal verläuft, einer nach aufwärts gerichteten ersten Halteplatte 23, einem Quersteg 24 und einer nach abwärts gerichteten zweiten Halteplatte 25. Durch diese Anordnung der über den Quersteg 24 miteinander verbundenen Halteplatten 23 und 25 ist zwischen ihnen eine nach unten offene Nut 26 gebildet. Auf der Grundplatte 22 ist mit seitlichem Abstand zu der ersten Halteplatte 23 eine nach aufwärts gerichtete Rippe 27 angeordnet. Die Verbindungsstücke 21 sind mit ihrer Rippe 27 in einen der Aufnahmeschlitze 7 eingesteckt und dauerhaft verklebt, wodurch sie fest mit der entsprechenden Verkleidungsplatte 4 verbunden sind.

Die obere Ausführungsform 30 der ersten Kupplungsmittel I weist ein Eckstück 31 auf. Das Eckstück 31 besteht aus einer ersten Halteplatte 32, die in der Gebrauchslage des Eckstückes 31 vertikal verläuft, einem Quersteg 33 und einer parallel zur Halteplatte 32 verlaufenden zweiten Halteplatte 34. Durch diese Anordnung der über den Quersteg 33 miteinander verbundenen Platten 32, 34 ist zwischen ihnen eine vertikal verlaufende Nut 35 gebildet. An der Halteplatte 32 ist auf der der Halteplatte 34 gegenüberliegenden Seite eine horizontal abstehende Rippe 36 angeordnet. Die Eckstücke 31 sind mit ihrer Rippe 36 in einen der horizontal verlaufenden Aufnahmeschlitze 10 an der Innenfläche 8 der Verkleidungsplatten 4 eingesteckt und dauerhaft verklebt, wodurch sie fest mit der entsprechenden Verkleidungsplatte 4 verbunden sind.

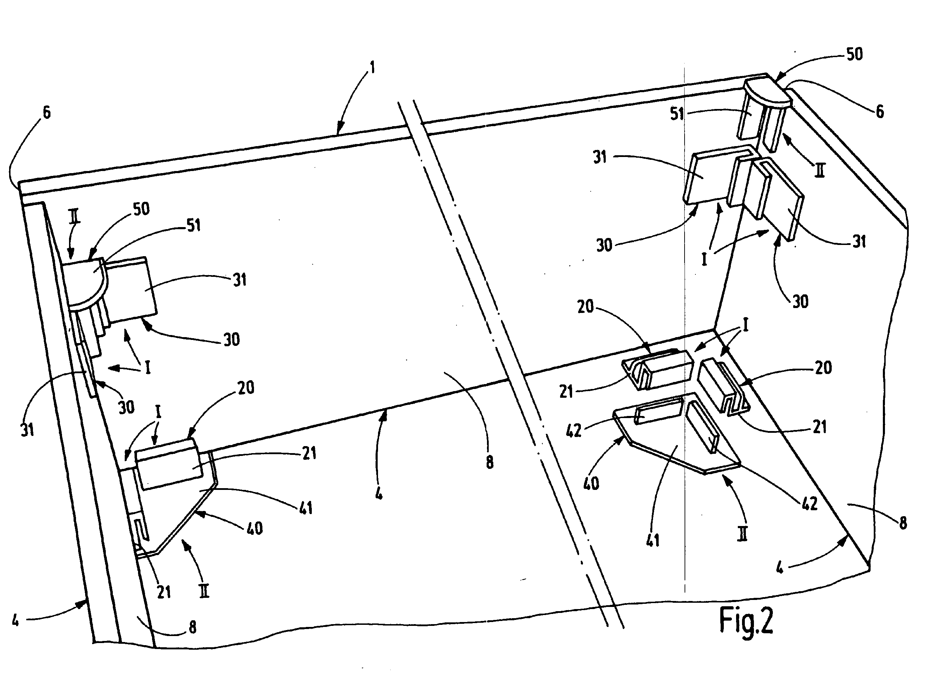

Die untere Ausführungsform 40 der zweiten Kupplungsmittel II weist eine dreieckförmige Trägerplatte 41 auf. Die Trägerplatte 41 untergreift die Eckbereiche jeweils zweier im Winkel von 90° zueinander stehender Verkleidungsplatten 4. Auf der Oberseite der Trägerplatte 41 sind zwei nach aufwärts gerichtete Rippen 42 ausgebildet, die wie die Verkleidungsplatten 4 in einem Winkel von 90° zueinander stehen. Die Dicke der Rippen 42 ist an die Breite der Nut 26, d. h. an das Abstandsmaß zwischen den Halteplatten 23, 25 der Verbindungsstücke 21 angepasst.
Bei der in Fig. 3 dargestellten, gegenüber der Fig. 2 weitergebildeten Ausführung der Trägerplatte 41 ist auf ihrer Oberseite ein Gewindeansatz 43 fest angeordnet, in den eine Justierschraube 44 eingeschraubt ist.

Die obere Ausführungsform 50 der zweiten Kupplungsmittel 11 weist ein Sperrglied 51 auf. Das Sperrglied 51 besteht aus einer Trägerplatte 52, die in der Gebrauchslage des Sperrgliedes 51 horizontal verläuft, und zwei an ihr befestigten, vertikal nach abwärts ragenden Zapfen 53, 54. Die Zapfen 53, 54 haben vorzugsweise einen viereckigen Querschnitt und sind ihrer Breite und Dicke an die entsprechenden Abmessungen der Nut 35 der Eckstücke 31 angepasst.

Die Montage einer Verkleidung geschieht wie folgt:
Die als Bausatz vorliegende Verkleidung 1 besteht aus vier Verkleidungsplatten 4 und
einer entsprechenden Anzahl erster und zweiter Kupplungsmittel I und II.

Als erstes werden die den Verkleidungsplatten 4 zugeordneten ersten Kupplungsmittel I in ihrer unteren und oberen Ausführungsform 20 und 30 mit den Verkleidungsplatten 4 fest verbunden. Dies geschieht, indem die Verbindungsstücke 21 der unteren Ausführungsform 20 mit ihrer jeweiligen Rippe 27 in einen der zwei in jeder Verkleidungsplatte 4 ausgebildeten vertikal verlaufenden Aufnahmeschlitze 7 eingeschoben werden. Bei bündiger Anlage der Grundplatte 22 an der unteren Stirnseite 5 der Verkleidungsplatte 4 wird das Verbindungsstück 21 mit Hilfe eines in den Aufnahmeschlitz 7 eingebrachten Klebers dauerhaft mit der Verkleidungsplatte 4 verbunden.
Das Einsetzen der Verbindungsstücke 21 und das Verkleben ihrer Rippen 27 im Aufnahmeschlitz 7 der Verkleidungsplatten 4 kann gegebenenfalls schon werksseitig durchgeführt werden.

In ähnlicher Weise werden auch die Eckstücke 31 der oberen Ausführungsform 30 mit ihrer jeweiligen Rippe 36 in einen der zwei in jeder Verkleidungsplatte 4 ausgebildeten horizontal verlaufenden Aufnahmeschlitze 10 eingeschoben. Bei bündiger Anlage der Halteplatte 32 an der Innenseite 8 der Verkleidungsplatte 4 wird das Eckstück 31 mit Hilfe eines in den Aufnahmeschlitz 10 eingebrachten Klebers dauerhaft mit der Verkleidungsplatte 4 verbunden.
Auch diese Verbindung kann bereits werksseitig hergestellt werden.

Anschließend werden die Trägerplatten 41 der unteren Ausführungsform 40 der zweiten Kupplungsmittel II an denjenigen Stellen auf dem Boden ausgelegt, an denen je zwei der zusammenzufügenden Verkleidungsplatten 4 im Winkel von 90° aneinanderstoßen. Danach werden die Verkleidungsplatten 4 mit ihren Verbindungsstücken 21 derart auf die Trägerplatten 41 aufgesetzt, das sich die Verbindungsstücke 21 mit ihren Nuten 26 über die Rippen 42 schieben. Auf diese Weise bilden die jetzt zusammengesteckten Kupplungsmittel 20, 40 eine quer zu den Innen- bzw. Außenflächen 8 bzw. 10 gerichtete formschlüssige Verklammerung der jeweils aneinanderstoßenden Verkleidungsplatten 4.

Schließlich werden die Sperrglieder 51 der oberen Ausführungsform 50 der zweiten Kupplungsmittel II mit den zugeordneten Eckstücken 31 der oberen Ausführungsform 30 der ersten Kupplungsmittel I in Kupplungsstellung gebracht, indem die Sperrglieder 51 derart in je zwei im Winkel von 90° aneinander anliegende Eckstücke 31 eingeschoben werden, dass die Zapfen 53, 54 in die Nuten 35 eingreifen. Auf diese Weise bilden die jetzt zusammengesteckten Kupplungsmittel 30, 50 eine weitere quer zu den Innen- bzw. Außenflächen 8 bzw. 10 gerichtete formschlüssige Verklammerung der jeweils aneinanderstoßenden Verkleidungsplatten 4.
Durch diese zweifache formschlüssige Verklammerung je zweier aneinanderstoßender Verkleidungsplatten 4 werden die vier Verkleidungsplatten 4 des Bausatzes zu einer stabilen, verwindungssteifen Verkleidung 1 zusammengefügt.

Die vorstehend beschriebene Montage der Verkleidung 1 kann unabhängig von dem zu verkleidenden Behälter 2 erfolgen, indem die Verkleidungsplatten 4 neben dem Behälter 2 zusammengesetzt werden, worauf dieser anschließend in die fertige Verkleidung 1 hineingesetzt wird. Die Montage der Verkleidung 1 kann aber auch um den Behälter 2 herum erfolgen. In diesem Fall könnte es zweckmäßig sein, die Trägerplatten 41 nicht wie in der Zeichnung dargestellt, dreieckförmig, sondern L- förmig auszubilden.

Sofern der Behälter 2 auf einem schrägen oder unebenen Untergrund steht und durch geeignete Mittel vertikal bzw. horizontal ausgerichtet wird, sollte auch die Verkleidung 1 entsprechend ausgerichtet werden. In diesem Fall werden die in Fig. 3 dargestellten Trägerplatten 41 benutzt, die mit einem Gewindeansatz 43 und einer darin aufgenommenen Justierschraube 44 ausgestattet sind. Mit Hilfe dieser Justierschrauben 44 lässt sich nun auch die Verkleidung 1 vertikal bzw. horizontal und gegebenenfalls höhenmäßig ausrichten. Sofern der Behälter 2 und die Verkleidung 1 auf einem weichen Untergrund wie z. B. Sand, Kies oder Rasen aufgestellt werden sollen, kann es zweckmäßig sein, wenn beide auf eine gemeinsame biegesteife Bodenplatte gestellt werden.

## Patentansprüche

1. Bausatz zur Bildung einer Verkleidung (1) für einen an seiner Oberseite offenen Behälter (2), bestehend aus
Verkleidungsplatten (4) zum Abdecken der Seitenwände (3) des Behälters (2),
ersten Kupplungsmitteln (I), die an der Unterseite und / oder der Innenseite der Verkleidungsplatten (4) fest angebracht sind und
zweiten Kupplungsmitteln (II), die durch eine vertikale Fügebewegung mit je zwei der ersten Kupplungsmittel (I) zweier benachbarter Verkleidungsplatten (4) in Kupplungsstellung bringbar sind und zur Verkleidung von im Grundriss vieleckigen oder rechteckigen Behältern (2) je zwei einander benachbarte Verkleidungsplatten (4) in einem entsprechenden Winkel zueinander stehen,
die Verkleidungsplatten (4) im Bereich ihrer unteren Stirnseite (5), sowie an ihrer Innenfläche (8) im Bereich vertikal verlaufender Stimflächen (6) Aufnahmeschlitze (7, 10) aufweisen,
die ersten Kupplungsmittel (I) in einer unteren Ausführungsform (20) Verbindungsstücke (21) aufweisen, die mittels einer aufwärts gerichteten Rippe (27) in die im Bereich der unteren Stirnseiten (5) der Verkleidungsplatten (4) vorgesehenen Aufnahmeschlitze (7) fest einsteckbar sind und mit seitlichem Abstand zu der Rippe (27) eine nach unten offene Nut (26) aufweisen,*
die zweiten Kupplungsmittel (II) in einer unteren Ausführungsform (40) Trägerplatten (41) aufweisen, die den Eckbereichen je zweier in einem Winkel zueinander stehender Verkleidungsplatten (4) zugeordnet sind, wobei die Trägerplatten (41) je zwei im gleichen Winkel wie die zugeordneten Verkleidungsplatten (4) ausgerichtete aufwärts gerichtete Rippen (42) aufweisen, auf die die an den Verkleidungsplatten (4) befestigten Verbindungsstücke (21) mit der nach unten offenen Nut (26) aufsteckbar sind.
die ersten Kupplungsmittel (I) in einer oberen Ausführungsform (30) Eckstücke (31) aufweisen, die mit vertikalem Abstand zu den Trägerplatten (41) jeweils paarweise je zwei der in einem Winkel zueinander stehenden Verkleidungsplatten (4) zugeordnet sind, je eine vertikal verlaufende Nut (35) aufweisen und mit horizontal vorstehenden Rippen (36) in die an der Innenfläche (8) der Verkleidungsplatten (4) vorgesehenen Aufnahmeschlitze (70) einsatzbar sind, und
die zweiten Kupplungsmittel (II) in einer oberen Ausführungsform (50) Sperrglieder (51) aufweisen, die mit je zwei vertikal verlaufenden Zapfen (53, 54) in die jeweilige Nut (35) je zweier benachbarter Eckstücke (31) einschiebbar sind.

2. Bausatz nach Anspruch 1, **dadurch gekennzeichnet, dass** das Verbindungsstück (21) aus einer schmalen horizontalen Grundplatte (22), einer nach aufwärts gerichteten ersten Halteplatte (23), einem Quersteg (24) und einer nach abwärts gerichteten zweiten Halteplatte (25) besteht, wobei zwischen den beiden Halteplatten (23, 25) die nach unten offene Nut (26) gebildet ist, und dass auf der Grundplatte (22) mit seitlichem Abstand zu der ersten Halteplatte (23) die nach aufwärts gerichtete Rippe (27) ausgebildet ist.

3. Bausatz nach Anspruch 1, **dadurch gekennzeichnet, dass** die Trägerplatte (41) je zwei im Winkel zueinander stehende Verkleidungsplatten (4) in den Eckbereichen untergreift und auf ihrer Oberseite die beiden aufwärts gerichteten Rippen (42) angeordnet sind.

4. Bausatz nach Anspruch 1, **dadurch gekennzeichnet, dass** das Eckstück (31) aus einer ersten vertikalen Halteplatte (32), einem Quersteg (33) und einer parallel zur Halteplatte (32) gerichteten zweiten Halteplatte (34) besteht, wodurch zwischen ihnen die vertikal verlaufende Nut (35) gebildet ist, und dass auf der Außenseite der Halteplatte (32) die horizontal vorstehende Rippe (36) ausgebildet ist.

5. Bausatz nach Anspruch 1, **dadurch gekennzeichnet, dass** das Sperrglied (51) aus einer Grundplatte (52) und den zwei vertikal nach abwärts ragenden Zapfen (53, 54) besteht, wobei diese entsprechend der Form der Nuten (35) in den Eckstücken (31) einen viereckigen Querschnitt aufweisen.

6. Bausatz nach Anspruch 1 und 3, **dadurch gekennzeichnet, dass** auf den Trägerplatten (41) ein Gewindeansatz (43) für eine in vertikaler Richtung verstellbare Justierschraube (44) angeordnet ist

7. Bausatz nach Anspruch 6, **dadurch gekennzeichnet, dass** sich die Justierschrauben (44) auf einer den Behälter (2) tragenden Bodenplatte abstützen.

8. Verkleidung (1) für einen an seiner Oberseite offenen Behälter (2), aufweisend:
eine der Anzahl der Seitenwände des Behälters (2) entsprechende Anzahl von Verkleidungsplatten (4) zum Abdecken der Seitenwände (3) des Behälters (2),
erste Kupplungsmittel (I), die an der Unterseite und / oder der Innenseite der Verkleidungsplatten (4) fest angebracht sind und zweite Kupplungsmittel (II), die durch eine vertikale Fügebewegung mit je zwei der ersten Kupplungsmittel (I) zweier benachbarter Verkleidungsplatten (4) in Kupplungsstellung gebracht sind, und dass zur Verkleidung von im Grundriss vieleckigen oder rechteckigen Behältern (2) je zwei einander benachbarte Verkleidungsplatten (4) in einem entsprechenden Winkel zueinander stehen,
die Verkleidungsplatten (4) im Bereich ihrer unteren Stirnseite (5), sowie an ihrer Innenfläche (8) im Bereich vertikal verlaufender Stimflächen (6) Aufnahmeschlitze (7, 10) aufweisen,
die ersten Kupplungsmittel (I) in einer unteren Ausführungsform (20) Verbindungsstücke (21) aufweisen, die mittels einer aufwärts gerichteten Rippe (27) in die im Bereich der unteren Stirnseiten (5) der Verkleidungsplatten (4) vorgesehenen Aufnahmeschlitze (7) fest einsteckbar sind und mit seitlichem Abstand zu der Rippe (27) eine nach unten offene Nut (26) aufweisen,
die zweiten Kupplungsmittel (II) in einer unteren Ausführungsform (40) Trägerplatten (41) aufweisen, die den Eckbereichen je zweier in einem Winkel zueinander stehender Verkleidungsplatten (4) zugeordnet sind, wobei die Trägerplatten (41) je zwei im gleichen Winkel wie die zugeordneten Verkleidungsplatten (4) ausgerichtete aufwärts gerichtete Rippen (42) aufweisen, auf die die an den Verkleidungsplatten (4) befestigten Verbindungsstücke (21) mit der nach unten offenen Nut (26) aufgesteckt sind,
die ersten Kupplungsmittel (I) in einer oberen Ausführungsform (30) Eckstücke (31) aufweisen, die mit vertikalem Abstand zu den Trägerplatten (41) jeweils paarweise je zwei der in einem Winkel zueinander stehenden Verkleidungsplatten (4) zugeordnet sind, je eine vertikal verlaufende Nut (35) aufweisen und mit horizontal vorstehenden Rippen (36) in die an der Innenfläche (8) der Verkleidungsplatten (4) vorgesehenen Aufnahmeschlitze (10) eingesetzt sind, und
die zweiten Kupplungsmittel (II) in einer oberen Ausführungsform (50) Sperrglieder (51) ausweisen, die mit je zwei vertikal verlaufenden Zapfen (53, 54) in die jeweilige Nut (35) je zweier benachbarter Eckstücke (31) eingeschoben sind.

9. Verkleidung nach Anspruch 8, **dadurch gekennzeichnet, dass** das Verbindungsstück (21) aus einer schmalen horizontalen Grundplatte (22), einer nach aufwärts gerichteten ersten Halteplatte (23), einem Quersteg (24) und einer nach abwärts gerichteten zweiten Halteplatte (25) besteht, wobei zwischen den beiden Halteplatten (23, 25) die nach unten offene Nut (26) gebildet ist, und dass auf der Grundplatte (22) mit seitlichem Abstand zu der ersten Halteplatte (23) die nach aufwärts gerichtete Rippe (27) ausgebildet ist.

10. Verkleidung nach Anspruch 8, **dadurch gekennzeichnet, dass** die Trägerplatte (41) je zwei im Winkel zueinander stehende Verkleidungsplatten (4) in den Eckbereichen untergreift und auf ihrer Oberseite die beiden aufwärts gerichteten Rippen (42) angeordnet sind.

11. Verkleidung nach Anspruch 8, **dadurch gekennzeichnet, dass** das Eckstück (31) aus einer ersten vertikalen Halteplatte (32), einem Quersteg (33) und einer parallel zur Halteplatte (32) gerichteten zweiten Halteplatte (34) besteht, wodurch zwischen ihnen die vertikal verlaufende Nut (35) gebildet ist, und dass auf der Außenseite der Halteplatte (32) die horizontal vorstehende Rippe (36) ausgebildet ist.

12. Verkleidung nach Anspruch 8, **dadurch gekennzeichnet, dass** das Sperrglied (51) aus einer Grundplatte (52) und den zwei vertikal nach abwärts ragenden Zapfen (53, 54) besteht, wobei diese entsprechend der Form der Nuten (35) in den Eckstücken (31) einen viereckigen Querschnitt aufweisen.

13. Verkleidung nach Anspruch 8 und 10, **dadurch gekennzeichnet, dass** auf den Trägerplatten (41) ein Gewindeansatz (43) für eine in vertikaler Richtung verstellbare Justierschraube (44) angeordnet ist.

14. Verkleidung nach Anspruch 13, **dadurch gekennzeichnet, dass** sich die Justierschrauben (44) auf einer den Behälter (2) tragenden Bodenplatte abstützen.

## Claims

1. Construction kit for forming cladding (1) for a container (2) which is open at the top, consisting of cladding panels (4) for covering the side walls (3) of the container (2),
first coupling means (I), which are firmly attached to the underside and/or the inner side of the cladding panels (4), and
second coupling means (II), which can be brought by a vertical joining movement into a coupling position with in each case two of the first coupling means (I) of two adjacent cladding panels (4), and, in order to clad containers (2) which have a polygonal or rectangular outline, in each case two adjacent cladding panels (4) are at an appropriate angle to one another,
the cladding panels (4) have receiving slots (7, 10) in the region of their lower end face (5) and on their inner surface (8) in the region of vertically extending end faces (6),
the first coupling means (I) have, in a lower embodiment (20), connection pieces (21), which can be firmly plugged, by means of an upwardly directed rib (27), into the receiving slots (7) provided in the region of the lower end faces (5) of the cladding panels (4), and have a downwardly open groove (26) laterally spaced apart from the rib (27),
the second coupling means (II) have, in a lower embodiment (40), support plates (41), which are assigned to the corner regions of in each case two cladding panels (4) that are at an angle to one another, wherein the support plates (41) have in each case two upwardly directed ribs (42), which are oriented at the same angle as the assigned cladding panels (4) and onto which the connection pieces (21) fastened to the cladding panels (4) can be plugged by way of the downwardly open groove (26),
the first coupling means (I) have, in an upper embodiment (30), corner pieces (31), which, in a manner vertically spaced apart from the support plates (41), are assigned in each case in pairs to in each case two of the cladding panels (4) that are at an angle to one another, have in each case a vertically extending groove (35) and can be inserted by way of horizontally protruding ribs (36) into the receiving slots (10) provided on the inner side (8) of the cladding panels (4), and
the second coupling means (II) have, in an upper embodiment (50), blocking members (51), which can be pushed by way of in each case two vertically extending pegs (53, 54) into the respective groove (35) of in each case two adjacent corner pieces (31).

2. Construction kit according to Claim 1, **characterized in that** the connection piece (21) consists of a narrow horizontal base plate (22), an upwardly directed first retaining plate (23), a crosspiece (24) and a downwardly directed second retaining plate (25), wherein the downwardly open groove (26) is formed between the two retaining plates (23, 25), and **in that** the upwardly directed rib (27) is formed on the base plate (22) in a manner laterally spaced apart from the first retaining plate (23).

3. Construction kit according to Claim 1, **characterized in that** the support plate (41) engages under the corner regions of in each case two cladding plates (4) that are at an angle to one another, and the two upwardly directed ribs (42) are arranged on its top side.

4. Construction kit according to Claim 1, **characterized in that** the corner piece (31) consists of a first vertical retaining plate (32), a crosspiece (33) and a second retaining plate (34) directed parallel to the retaining plate (32), with the vertically extending groove (35) being formed therebetween, and **in that** the horizontally protruding rib (36) is formed on the outer side of the retaining plate (32).

5. Construction kit according to Claim 1, **characterized in that** the blocking member (51) consists of a base plate (52) and the two vertically downwardly projecting pegs (53, 54), wherein the latter have a square cross section corresponding to the form of the grooves (35) in the corner pieces (31).

6. Construction kit according to Claims 1 and 3, **characterized in that** a threaded extension (43) for an adjusting screw (44) that can be adjusted in the vertical direction is arranged on the support plates (41).

7. Construction kit according to Claim 6, **characterized in that** the adjusting screws (44) are supported on a base plate that supports the container (2).

8. Cladding (1) for a container (2) which is open at the top, having:
a number of cladding panels (4), which corresponds to the number of side walls of the container (2), for covering the side walls (3) of the container (2),
first coupling means (I), which are firmly attached to the underside and/or the inner side of the cladding panels (4), and second coupling means (II), which are brought by a vertical joining movement into a coupling position with in each case two of the first coupling means (I) of two adjacent cladding panels (4), and, in order to clad containers (2) which have a polygonal or
rectangular outline, in each case two adjacent cladding panels (4) are at an appropriate angle to one another,
the cladding panels (4) have receiving slots (7, 10) in the region of their lower end face (5) and on their inner surface (8) in the region of vertically extending end faces (6),
the first coupling means (I) have, in a lower embodiment (20), connection pieces (21), which can be firmly plugged, by means of an upwardly directed rib (27), into the receiving slots (7) provided in the region of the lower end faces (5) of the cladding panels (4), and have a downwardly open groove (26) laterally spaced apart from the rib (27),
the second coupling means (II) have, in a lower embodiment (40), support plates (41), which are assigned to the corner regions of in each case two cladding panels (4) that are at an angle to one another, wherein the support plates (41) have in each case two upwardly directed ribs (42), which are oriented at the same angle as the assigned cladding panels (4) and onto which the connection pieces (21) fastened to the cladding panels (4) can be plugged by way of the downwardly open groove (26),
the first coupling means (I) have, in an upper embodiment (30), corner pieces (31), which, in a manner vertically spaced apart from the support plates (41),
are assigned in each case in pairs to in each case two of the cladding panels (4) that are at an angle to one another, have in each case a vertically extending groove (35) and can be inserted by way of horizontally protruding ribs (36) into the receiving slots (10) provided on the inner side (8) of the cladding panels (4), and
the second coupling means (II) have, in an upper embodiment (50), blocking members (51), which are pushed by way of in each case two vertically extending pegs (53, 54) into the respective groove (35) of in each case two adjacent corner pieces (31).

9. Cladding according to Claim 8, **characterized in that** the connection piece (21) consists of a narrow horizontal base plate (22), an upwardly directed first retaining plate (23), a crosspiece (24) and a downwardly directed second retaining plate (25), wherein the downwardly open groove (26) is formed between the two retaining plates (23, 25), and **in that** the upwardly directed rib (27) is formed on the base plate (22) in a manner laterally spaced apart from the first retaining plate (23).

10. Cladding according to Claim 8, **characterized in that** the support plate (41) engages under the corner regions of in each case two cladding plates (4) that are at an angle to one another, and the two upwardly directed ribs (42) are arranged on its top side.

11. Cladding according to Claim 8, **characterized in that** the corner piece (31) consists of a first vertical retaining plate (32), a crosspiece (33) and a second retaining plate (34) directed parallel to the retaining plate (32), with the vertically extending groove (35) being formed therebetween, and **in that** the horizontally protruding rib (36) is formed on the outer side of the retaining plate (32).

12. Cladding according to Claim 8, **characterized in that** the blocking member (51) consists of a base plate (52) and the two vertically downwardly projecting pegs (53, 54), wherein the latter have a square cross section corresponding to the form of the grooves (35) in the corner pieces (31).

13. Cladding according to Claims 8 and 10, **characterized in that** a threaded extension (43) for an adjusting screw (44) that can be adjusted in the vertical direction is arranged on the support plates (41).

14. Cladding according to Claim 13, **characterized in that** the adjusting screws (44) are supported on a base plate that supports the container (2).

## Revendications

1. Ensemble de pièces pour la réalisation d'un revêtement (1) pour un contenant (2) ouvert sur son côté supérieur, constitué
de plaques de revêtement (4) pour recouvrir les parois latérales (3) du contenant (2),
de premiers moyens d'accouplement (I) qui sont montés fixement sur le côté inférieur et/ou le côté intérieur des plaques de revêtement (4) et
de deuxièmes moyens d'accouplement (II) qui peuvent être amenés par un déplacement d'assemblage vertical dans une position d'accouplement avec à chaque fois deux des premiers moyens d'accouplement (I) de deux plaques de revêtement adjacentes (4), et, pour le revêtement de contenants (2) de projection horizontale polygonale ou rectangulaire, à chaque fois deux plaques de revêtement (4) adjacentes l'une à l'autre se situant suivant un angle correspondant l'une par rapport à l'autre,
les plaques de revêtement (4) présentant des fentes de réception (7, 10) dans la région de leur côté frontal inférieur (5), ainsi qu'au niveau de leur surface intérieure (8) dans la région de surfaces frontales (6) s'étendant verticalement, les premiers moyens d'accouplement (I) présentant, dans une forme de réalisation inférieure (20), des éléments de connexion (21) qui peuvent être enfichés fixement au moyen d'une nervure (27) orientée vers le haut dans les fentes de réception (7) prévues dans la région des côtés frontaux inférieurs (5) des plaques de revêtement (4), et présentant à distance latérale des nervures (27) une rainure (26) ouverte vers le bas,
les deuxièmes moyens d'accouplement (II) présentant, dans une forme de réalisation inférieure (40), des plaques de support (41) qui sont associées aux régions de coin de deux plaques de revêtement (4) orientées suivant un certain angle l'une par rapport à l'autre, les plaques de support (41) présentant à chaque fois deux nervures (42) orientées vers le haut suivant le même angle que les plaques de revêtement associées (4), sur lesquelles nervures peuvent être enfichés les éléments de connexion (21) fixés sur les plaques de revêtement (4) avec la rainure ouverte vers le bas (26),
les premiers moyens d'accouplement (I) présentant, dans une forme de réalisation supérieure (30), des pièces de coin (31) qui sont associées à distance verticale des plaques de support (41) à chaque fois par paire deux respectives des plaques de revêtement (4) orientées suivant un certain angle l'une par rapport à l'autre, qui présentent à chaque fois une rainure (35) s'étendant verticalement et peuvent être insérées avec des nervures saillant horizontalement (36) dans les fentes de réception (10) prévues sur la surface interne (8) des plaques de revêtement (4), et
les deuxièmes moyens d'accouplement (II), dans une forme de réalisation supérieure (50), présentant des organes de verrouillage (51) qui peuvent être enfoncés avec à chaque fois deux tourillons (53, 54) s'étendant verticalement, dans la rainure respective (35) de deux pièces d'angle adjacentes respectives (31).

2. Ensemble de pièces selon la revendication 1, **caractérisé en ce que** l'élément de connexion (21) se compose d'une plaque de base étroite horizontale (22), d'une première plaque de retenue (23) orientée vers le haut, d'une nervure transversale (24) et d'une deuxième plaque de retenue (25) orientée vers le bas, la rainure (26) ouverte vers le bas étant formée entre les deux plaques de retenue (23, 25), et **en ce que** la nervure (27) orientée vers le haut est réalisée sur la plaque de base (22) à distance latérale de la première plaque de retenue (23).

3. Ensemble de pièces selon la revendication 1, **caractérisé en ce que** la plaque de support (41) vient en prise par le dessous à chaque fois avec deux plaques de revêtement (4) orientées suivant un certain angle l'une par rapport à l'autre dans les régions des coins et les deux nervures (42) orientées vers le haut sont disposées sur son côté supérieur.

4. Ensemble de pièces selon la revendication 1, **caractérisé en ce que** la pièce de coin (31) se compose d'une première plaque de retenue verticale (32), d'une nervure transversale (33) et d'une deuxième plaque de retenue (34) orientée parallèlement à la plaque de retenue (32), de sorte que la rainure (35) s'étendant verticalement soit formée entre elles, et **en ce que** la nervure (36) saillant horizontalement est réalisée sur le côté extérieur de la plaque de retenue (32).

5. Ensemble de pièces selon la revendication 1, **caractérisé en ce que** l'organe de verrouillage (51) se compose d'une plaque de base (52) et des deux tourillons (53, 54) saillant verticalement vers le bas, ceux-ci présentant une section transversale quadrangulaire de manière correspondant à la forme des rainures (35) dans les pièces de coin (31).

6. Ensemble de pièces selon les revendications 1 et 3, **caractérisé en ce qu'**un insert fileté (43) pour une vis d'ajustement (44) réglable dans la direction verticale est disposé sur les plaques de support (41).

7. Ensemble de pièces selon la revendication 6, **caractérisé en ce que** les vis d'ajustement (44) s'appuient sur une plaque de fond portant le contenant (2).

8. Revêtement (1) pour un contenant (2) ouvert sur son côté supérieur, présentant :
un nombre de plaques de revêtement (4) correspondant au nombre des parois latérales du contenant (2), pour recouvrir les parois latérales (3) du contenant (2),
des premiers moyens d'accouplement (I) qui sont montés fixement sur le côté inférieur et/ou le côté intérieur des plaques de revêtement (4) et
des deuxièmes moyens d'accouplement (II), qui sont amenés dans la position d'accouplement par un déplacement d'assemblage vertical avec à chaque fois deux des premiers moyens d'accouplement (I) de deux plaques de revêtement adjacentes (4), et
en ce que pour le revêtement de contenants (2) de projection horizontale polygonale ou
rectangulaire, à chaque fois deux plaques de revêtement (4) adjacentes sont disposées suivant un certain angle l'une par rapport à l'autre,
les plaques de revêtement (4) présentant des fentes de réception (7, 10) dans la région de leur côté frontal inférieur (5), ainsi que sur leur surface intérieure (8) dans la région de faces frontales (6) s'étendant verticalement,
les premiers moyens d'accouplement (I), présentant, dans une forme de réalisation inférieure (20), des éléments de connexion (21) qui peuvent être enfichés fixement au moyen d'une nervure (27) orientée vers le haut dans les fentes de réception (7) prévues dans la région des côtés frontaux inférieurs (5) des plaques de revêtement (4), et présentant à distance latérale des nervures (27) une rainure (26) ouverte vers le bas,
les deuxièmes moyens d'accouplement (II) présentant, dans une forme de réalisation inférieure (40), des plaques de support (41) qui sont associées aux régions de coin de deux plaques de revêtement (4) orientées suivant un certain angle l'une par rapport à l'autre, les plaques de support (41) présentant à chaque fois deux nervures (42) orientées vers le haut suivant le même angle que les plaques de revêtement associées (4), sur lesquelles nervures peuvent être enfichés les éléments de connexion (21) fixés sur les plaques de revêtement (4) avec la rainure ouverte vers le bas (26),
les premiers moyens d'accouplement (I) présentant, dans une forme de réalisation supérieure (30), des pièces de coin (31) qui sont associées à distance verticale des plaques de support (41) à chaque fois par paire deux respectives des plaques de revêtement (4) orientées suivant un certain angle l'une par rapport à l'autre, qui présentent à chaque fois une rainure (35) s'étendant verticalement et peuvent être insérées avec des nervures saillant horizontalement (36) dans les fentes de réception (10) prévues sur la surface interne (8) des plaques de revêtement (4), et
les deuxièmes moyens d'accouplement (II), dans une forme de réalisation supérieure (50), présentant des organes de verrouillage (51) qui sont enfoncés avec à chaque fois deux tourillons (53, 54) s'étendant verticalement, dans la rainure respective (35) de deux pièces d'angle adjacentes respectives (31).

9. Revêtement selon la revendication 8, **caractérisé en ce que** l'élément de connexion (21) se compose d'une plaque de base étroite horizontale (22), d'une première plaque de retenue (23) orientée vers le haut, d'une nervure transversale (24) et d'une deuxième plaque de retenue (25) orientée vers le bas, la rainure (26) ouverte vers le bas étant formée entre les deux plaques de retenue (23, 25), et **en ce que** la nervure (27) orientée vers le haut est réalisée sur la plaque de base (22) à distance latérale de la première plaque de retenue (23).

10. Revêtement selon la revendication 8, **caractérisé en ce que** la plaque de support (41) vient en prise par le dessous à chaque fois avec deux plaques de revêtement (4) orientées suivant un certain angle l'une par rapport à l'autre dans les régions des coins et les deux nervures (42) orientées vers le haut sont disposées sur son côté supérieur.

11. Revêtement selon la revendication 8, **caractérisé en ce que** la pièce de coin (31) se compose d'une première plaque de retenue verticale (32), d'une nervure transversale (33) et d'une deuxième plaque de retenue (34) orientée parallèlement à la plaque de retenue (32), de sorte que la rainure (35) s'étendant verticalement soit formée entre elles, et **en ce que** la nervure (36) saillant horizontalement est réalisée sur le côté extérieur de la plaque de retenue (32).

12. Revêtement selon la revendication 8, **caractérisé en ce que** l'organe de verrouillage (51) se compose d'une plaque de base (52) et des deux tourillons (53, 54) saillant verticalement vers le bas, ceux-ci présentant une section transversale quadrangulaire de manière correspondant à la forme des rainures (35) dans les pièces de coin (31).

13. Revêtement selon les revendications 8 et 10, **caractérisé en ce que** qu'un insert fileté (43) pour une vis d'ajustement (44) réglable dans la direction verticale est disposé sur les plaques de support (41).

14. Revêtement selon la revendication 13, **caractérisé en ce que** les vis d'ajustement (44) s'appuient sur une plaque de fond portant le contenant (2).
